# FASCICULE DE BREVET EUROPEEN

(11) **EP 1 713 342 B1**
(45) Date de publication et mention de la délivrance du brevet: **10.04.2019**
(21) Numéro de dépôt: 05717625.7
(22) Date de dépôt: 11.02.2005
(51) Int. Cl.: A21D 8/04, A21D 8/02, A21D 13/80, A21D 10/00

(54) **PATES FERMENTEES SUCREES DE QUALITE LONGUE CONSERVATION**
SÜSSFERMENTIERTE TEIGE MIT LANGER HALTBARKEIT
SHELF-STABLE SWEET FERMENTED DOUGHS

(30) Priorité: 13.02.2004 FR 0401480
(43) Date de publication de la demande: 25.10.2006
(73) Titulaire: Intercontinental Great Brands LLC, East Hanover, NJ 07936 (US)
(72) Inventeur: IZOULET, Audrey, F-78180 Montigny Le Bretonneux (FR); TEISSIER, Philippe, F-91300 Massy (FR); DEBRU, François, F-78000 Versailles (FR)
(74) Mandataire: Boult Wade Tennant LLP
(86) Numéro de dépôt international: PCT/FR2005/000336
(87) Numéro de publication internationale: WO 2005/077193

(56) Documents cités:
- EP-A- 0 339 750
- WO-A-00/10395
- FR-A- 2 858 629
- US-A- 4 666 719
- US-A- 5 108 766
- US-A- 5 700 684
- US-A1- 2001 028 904
- US-B1- 6 465 027
- DATABASE WPI Section Ch, Week 198507 Derwent Publications Ltd., London, GB; Class D11, AN 1985-043591 XP002297630 & SU 1 105 167 A (VORON TECH INST) 30 juillet 1984 (1984-07-30)
- OTTOGALLI, GALLI, FOSCHINO: "Italian bakery products obtained with sour dough characterization of the typical microflora" ADVANCED FOOD SCIENCE, vol. 18, no. 5/6, 1996, pages 131-144, XP002332794
- ANONYMOUS: "Criteria for judging quality" INTERNET ARTICLE, [Online] 8 avril 2000 (2000-04-08), XP002332795 Extrait de l'Internet: URL:http://web.archive.org/web/20000408040 231/http://theartisan.net/flour_criteria_j udging.htm> [extrait le 2005-06-21]
- ANONYMOUS: "Le sinfonie" INTERNET ARTICLE, [Online] 4 novembre 2003 (2003-11-04), XP002332796 Extrait de l'Internet: URL:http://web.archive.org/web/20031104004 033/http://www.molinoagugiaro.it/Molino+Ag ugiaro+-+Azienda+-+Prodotti+-+Le+sinfonie+ ((eng)).htm> [extrait le 2005-06-21]

## Description

### DOMAINE TECHNIQUE DE L'INVENTION :

La présente invention est relative à la production de produits à pâte fermentée sucrée capables de longue conservation à température ambiante, tels que des *Panettone.* Elle est plus particulièrement relative à un procédé adapté à la production d'une telle pâte.

Les pâtes fermentées sucrées regroupent une grande variété de produits de pâtisserie et de viennoiserie. Certains de ces produits sont dits « de qualité longue conservation», car ils peuvent être conservés sous emballage à température ambiante pendant plus de 28 jours, généralement de 3 à 6 mois, voire jusqu'à 9 mois, sans se dessécher, ni rassir, ni perdre leurs qualités organoleptiques. La date limite d'utilisation optimale (DLUO) est donc de plus de 28 jours.

Ces pâtes fermentées sucrées de qualité longue conservation ne contiennent pourtant qu'une quantité tout à fait minimale de composés susceptibles d'être assimilés à des conservateurs et/ou absorbeurs d'oxygène. Ces pâtes sont donc particulièrement avantageuses tant sur le plan pratique, que sur le plan de la qualité alimentaire.

Parmi ces produits à pâte sucrée fermentée de qualité longue conservation, on peut par exemple citer des produits dont la conception a une origine traditionnelle, tels que les *Panettone, Pandoro,* et *Pugliese* qui, initialement, sont des spécialités italiennes, mais qui sont maintenant largement diffusés et consommés sous différentes variantes de réalisation. Il existe également des produits de viennoiserie de conception relativement plus récente, qui sont de qualité de longue conservation, tels que les petites brioches et petits moelleux commercialisés par le groupe DANONE, par exemple les produits que l'on trouve dans le commerce sous la désignation de «Soufflés Dorés aux fruits du soleil» dans la gamme Taillefine®.

### ARRIERE PLAN TECHNOLOGIQUE :

Traditionnellement, un produit à pâte fermentée sucrée de qualité longue conservation, tel qu'un *Panettone,* suit le schéma de production suivant :

### Étape 1 : Repiquage du levain chef

Dans un premier temps, on prépare un inoculum à partir d'un levain chef ou « *madre ».* Ce levain chef se présente sous forme pâteuse ou lyophilisée, et est soumis à un ou plusieurs repiquages sur substrat solide, de sorte à réactiver les cellules de microorganismes contenues dans le levain chef, et à ainsi disposer d'un inoculum qui est prêt à exercer son activité dans un substrat de pâte.

Par levain chef ou « *madre* », on entend une préparation de farine et d'eau 15 renfermant des ferments naturels, c'est-à-dire des micro-organismes aptes à fermenter tels que les levures ou les bactéries.

Par « réactiver », la personne du métier entend la reprise de la multiplication cellulaire des micro-organismes. Le levain chef qui est utilisé pour produire une pâte fermentée sucrée en suivant le mode traditionnel de fabrication doit généralement
être réactivé de sorte à ce que les cellules de micro-organismes qu'il contient soient en phase active de croissance, de préférence en phase de croissance exponentielle.
Le levain chef cellulairement réactivé est ainsi enrichi en cellules.
Les levains utilisés pour la fabrication de pâtes fermentées sucrées de qualité longue conservation sont généralement des levains traditionnels dont la composition microbienne peut varier d'un site de production à l'autre. Il est toutefois reconnu que, pour qu'une pâte fermentée sucrée soit de qualité longue conservation, le levain doit nécessairement contenir au moins une souche de levure, et au moins une souche de bactéries lactiques.

Les souches de levure utilisées ne semblent pas être d'une grande diversité. L'espèce *Saccharomyces exiguus* (ou sous sa forme ascosporogène, à savoir *Candida holmii)* est fréquemment citée pour les levains Panettone. Le Barnett Yeast Taxonomie

Studies stipule d'ailleurs que cette espèce a pour origine les levains italiens. L'espèce *Saccharomyces cerevisiae* semble également avoir son importance dans ce type de fermentation de levains.

A l'inverse de la flore fongique, les bactéries lactiques mises en oeuvre semblent beaucoup plus variées. Les brevets ou demandes de brevet EP 688 503 B1 , WO 00/10395, US 2001/0028904 A1 citent, entre autres, les espèces *Lactobacillus brevis, Lactobacillus sanfranciscensis* et *Lactobacillus plantarum.* On trouve par ailleurs citées les bactéries *Lactobacillus hilgardii, Lactobacillus comoensis, Lactobacillus alimentaries, Lactobacillus citreum, Lactobacillus italicus, Lactobacillus panex.* Il n'est en fait pas rare de trouver deux, voire trois espèces bactériennes différentes. Toutefois, lorsque *L. sanfranciscensis* est présent, il semblerait qu'il n'y ait pas d'autres bactéries qui se développent effectivement. On parle même, parfois, de symbiose ou d'association stricte entre la levure *S. exiguus* et la bactérie *L .sanfranciscensis.*

### Étape 2 : Rafraîchi

Dans un deuxième temps, le levain enrichi en cellules de micro-organisme issu de, ou le cas échéant, des étapes de repiquage est soumis à un ou plusieurs rafraîchis, de sorte à notamment permettre la production de métabolites de fermentation.

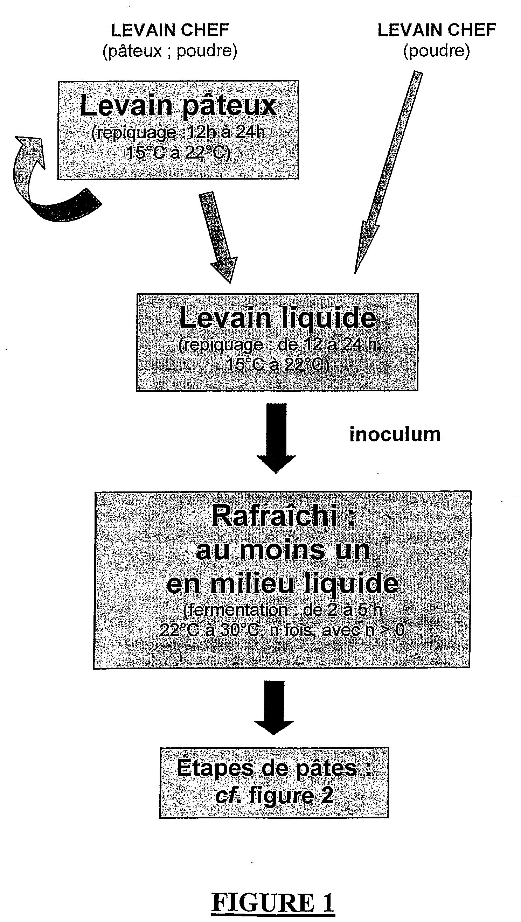

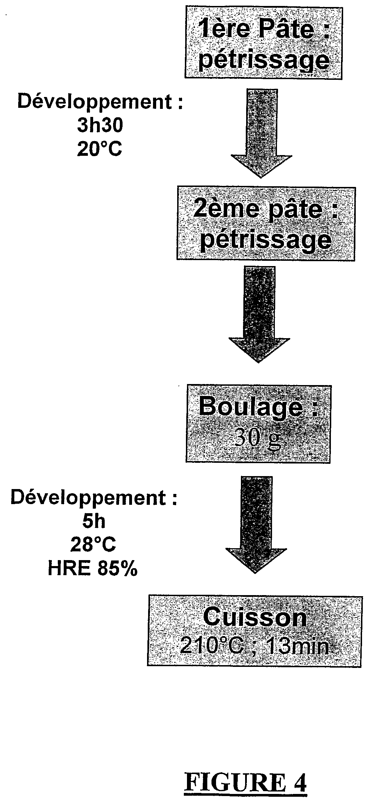

L'opération de rafraîchi est un élément caractéristique des procédés qui visent à produire des pâtes de qualité longue conservation. Après les étapes de repiquage, qui conduisent à l'obtention d'un levain cellulairement réactivé, il est en effet nécessaire de permettre à ce levain réactivé de développer plus avant les réactions de fermentation. On estime que c'est lors de ces étapes de rafraîchi, qu'est produit un certain nombre de métabolites de fermentation essentiels à l'obtention de la qualité longue conservation. Par rapport aux étapes de repiquage, les étapes de rafraîchi permettent également d'augmenter le volume de substrat.
Typiquement, l'étape de rafraîchi comprend l'incorporation du levain cellulairement réactivé, ou d'une fraction de celui-ci, dans un substrat pâteux qui est composé d'une partie des ingrédients qui composeront le substrat de pâte final. Ce substrat pâteux de rafraîchi est généralement essentiellement constitué de farine et d'eau ; il peut en outre comprendre quelques ingrédients additionnels plus secondaires, tels que du sel. Il est, en général, procédé à plusieurs étapes de rafraîchi en itération : on utilise alors une fraction du substrat issu du rafraîchi précédent comme apport de levain pour le rafraîchi suivant. Par exemple, la méthode traditionnelle de fabrication de Panettone comprend souvent trois étapes de rafraîchi, au cours desquelles le mélange pâteux est façonné en pâtons d'incubation ; pour le Pugliese, deux étapes de rafraîchi suffisent généralement *(cf.* l'article OTTOGALLI et al. 1996, Adv. Food. Sci. (CMTL) Vol.18 No.5/6 p131-144 « *Italian bakery products obtained with sour dough : characterization of the typical microflora », cf* plus particulièrement les figures 1 et 4 de cet article).

### Étape 3 : Étapes de pâte

Dans un troisième temps, on procède aux étapes dites « étapes de pâte », au cours desquelles on incorpore tout ou partie du levain issu des étapes de rafraîchi dans une pâte de pâtisserie. Le plus généralement, on procède également à un développement (ou levage) de la pâte de pâtisserie, c'est-à-dire une opération pendant laquelle la pâte gonfle en volume, de sorte à ce qu'elle prenne une texture plus aérée.
Pour former la pâte de pâtisserie, on utilise, en sus du levain rafraîchi, des ingrédients classiques de pâte de pâtisserie tels que farine, sucre et eau.

On procède donc d'abord à une première étape de pâte, en utilisant le mélange pâteux issu de la dernière étape de rafraîchi, pour en mélanger tout ou partie avec les ingrédients d'une première pâte de pâtisserie, de sorte à former une première pâte.
Cette pâte de pâtisserie varie en composition et concentrations selon le type de produit fini visé, mais comprend au moins un ou plusieurs sucre(s) (par exemple, saccharose, sirop de glucose, sucre inverti), une ou plusieurs farine(s), et
généralement de l'eau.
Pour obtenir un produit de qualité longue conservation, on utilise comme farine, aumoins une farine forte, telle qu'une farine de froment W320 à W400. En sus de cette farine forte, peuvent être utilisées d'autres farines telles que farine de malt, de seigle, de germes de blé, etc.
Le plus généralement, on utilisera également d'autres ingrédients de base de pâte de pâtisserie, tels que des oeufs, des jaunes d'oeufs, de la levure de bière, du sel, du lait, ou malt. Bien entendu, on peut également y incorporer d'autres ingrédients, tels que des émulsifiants, des graisses animales et végétales, de la glycérine, arômes naturels ou artificiels, etc. On peut également y trouver des ingrédients de type farine complète, son, flocons de céréales, morceaux de fruits confits, pépites de chocolat, etc.

Suivent alors des opérations classiques de pétrissage de sorte à former une pâte à structure homogène.

On cherche ensuite généralement à faire lever la pâte, c'est-à-dire à la faire gonfler. C'est pourquoi, le plus généralement, on ajoute une levure de type levure de bière aux ingrédients formant la pâte, et on place la pâte formée à une température qui est appropriée à la production de CO₂ par activité fermentaire de la levure de bière ajoutée.

Il y a généralement plusieurs étapes de pâte, réalisées en itération en incorporant tout ou partie de la pâte obtenue à l'issue de l'étape précédente dans un nouveau mélange d'ingrédients de pâte de pâtisserie.
La dernière étape de pâte comprend généralement également des opérations de division, boulage ou autre façonnage, avant mise en repos et éventuel développement de la pâte.

### Étape 4 : Cuisson

Il est alors généralement procédé à la cuisson de la pâte fermentée sucrée obtenue. Cette cuisson est réalisée selon les pratiques et usages adaptés au produit fini désiré. Pour des produits de type *Panettone,* la cuisson se déroule généralement à une température de 130 à 220°C pendant 15 à 30min.

Le produit final obtenu présente généralement un goût de levain caractéristique, ainsi qu'une texture aérée, tendre et élastique.
Il présente en outre la propriété de ne pas rassir sous emballage à température ambiante, pendant une période de plus de 28 jours, généralement de 3 à 6 mois, voire jusqu'à 9 mois.

Au total, le procédé de production d'une pâte fermentée sucrée de qualité longue conservation dure fréquemment plusieurs dizaines d'heures, par exemple environ 40 heures pour un produit de type *Panettone.*

On sait donc fabriquer des produits à pâte fermentée sucrée de qualité longue conservation tels que les *Panettone* depuis plusieurs décennies.

Toutefois, la conduite des étapes du procédé repose essentiellement sur des connaissances empiriques, essentiellement issues des coutumes et usages nationaux ou régionaux.

A ce jour, les procédés de production de produits à pâte fermentée sucrée de qualité longue conservation restent donc incomplètement optimisés en terme d'efficacité, d'adaptabilité, de durée, de praticabilité, voire parfois de contrôle sanitaire.

On ne maîtrise d'ailleurs pas totalement l'ensemble des paramètres intervenant dans le déroulement de ces étapes de procédé, de sorte qu'il est délicat pour un homme du métier de savoir quel paramètre modifier et dans quelle mesure.

On peut par exemple citer le brevet EP 688 503 B1, qui met l'accent sur les difficultés rencontrées par l'homme du métier lorsqu'il souhaite simplement augmenter la quantité de lait dans ce type de produit, sans pour autant perdre les qualités organoleptiques et de longue conservation du produit fini.
US 2001/028904 décrit des produits de boulangerie contenant des fructo-oligosaccharides, une méthode de fabrication de ces produits ainsi que des pâtons pour de tels produits.

US 4666719 décrit une culture qui peut entraîner la fermentation et le levain naturel dans des pains et des produits de boulangerie ; cette culture des bactéries nommées Lactobacillus brevis, et Saccharomyces sp. de préférence Saccharomyces dairensis.

EP339750 décrit des levains naturels partiellement déshydratés contenant une espèce de Saccharomyces ne fermentant pas le maltose et une espèce de Lactobacillus fermentant le maltose en tant que microorganismes majoritaires.

US 6465027 décrit un levain de boulangerie conservant, à basse température et pendant plusieurs semaines, toutes ses propriétés de fermentation de la pâte d'un pain au levain, et le procédé pour l'obtenir.

US5108766 décrit des aromatisants obtenus à partir de produits laitiers et utiles pour améliorer la saveur et le goût et la valeur nutritionnelle d'une variété de produits de boulangerie.

SU1105167 concerne l'industrie de la boulangerie, en particulier la technologie de fabrication d'un starter liquide pour la préparation de pain de seigle contenant bacteries lactiques, farine de seigle, eau et mélasse.

WO00/10395 décrit un produit au levain à haute teneur en bactéries lactiques vivantes, et notamment un procédé de préparation de celui-ci.

http://web.archive.org/web/20000408040231/http://theartisan.net/flour criteriajudgin g.htm décrit des méthodes de détermination des qualités de panification des farines telle que l'alvéographe.

http://web.archive.org/web/20031021231123/http://www.molinoagugiaro.it:80/ décrit divers types de farines pour applications boulangères et pâtissières.

Dans le domaine de la production de produits à pâte fermentée sucrée de qualité longue conservation, les quelques améliorations qui ont pu être décrites concernent généralement les étapes de sélection, fourniture et préparation du levain chef, ou les étapes de repiquage de ce levain chef, ou la composition de la pâte de pâtisserie mise en oeuvre dans les étapes de pâte, ou bien encore la technique de cuisson.

La présente invention propose quant à elle de réaliser l'étape ou, le cas échéant, au moins une des étapes de rafraîchi de manière différente de ce qui est actuellement pratiqué, à savoir de réaliser cette ou ces étapes de rafraîchi non pas en milieu pâteux, mais en milieu liquide.

### RÉSUMÉ DE L'INVENTION :

La présente demande a ainsi pour objet un nouveau procédé selon les revendications 1-24 de production de pâtes fermentées sucrées de qualité longue conservation (date limite d'utilisation optimale, ou DLUO, de plus de 28 jours sous emballage à température ambiante), de type *Panettone.* Ce procédé suit globalement l'ensemble des étapes classiques de production traditionnelle de telles pâtes, à savoir la fourniture d'un levain chef éventuellement cellulairement réactivé par repiquage, le rafraîchi de ce levain chef réactivé, et la réalisation des étapes de pâte avec ce levain chef réactivé et rafraîchi, mais propose de réaliser le rafraîchi, qui est un élément essentiel à l'obtention d'une qualité de longue conservation, non pas en milieu pâteux, mais en milieu liquide.
De préférence, le levain chef éventuellement repiqué, qui est mis en rafraîchi est lui aussi sous forme liquide.
Le procédé selon l'invention présente ainsi des avantages en terme de commodité d'emploi, maniabilité (pompage), mais aussi en terme de maîtrise des conditions opératoires et de la qualité sanitaire.

### BRÈVE DESCRIPTION DES FIGURES :

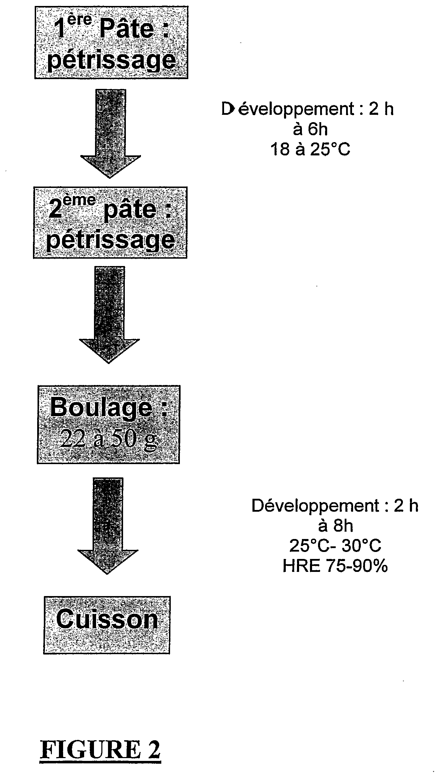

Les figures 1 et 2 présentent un schéma général d'un procédé qui permet la production d'un produit à pâte fermentée sucrée de qualité longue conservation.
Les figures 3 et 4 présentent un exemple de mode de réalisation d'un procédé, pour la production d'un produit à pâte fermentée sucrée de qualité longue conservation de type *Panettone.*

### DESCRIPTION DE L'INVENTION :

La présente invention est relative à la production de pâtes fermentées sucrées capables de longue conservation.
Le procédé selon l'invention est défini dans la revendication 1.
Le procédé ici décrit comprend :
- la fourniture d'un inoculum qui comprend au moins une souche de levure et au moins une souche de bactérie, qui, de préférence, est une souche de bactérie lactique, lesquelles souches de levure et bactérie ayant été éventuellement réactivées par repiquage préalable,
- au moins une étape de rafraîchi, qui est réalisée en milieu liquide, et qui destinée à permettre à l'inoculum fourni de produire des métabolites par fermentation,
- au moins une étape de pâte, au cours de laquelle la pâte est généralement mise à lever, et
- la cuisson de la pâte fermentée sucrée.

Lesdites souches de levure et bactérie qui sont fournies pour ladite au moins une étape de rafraîchi, peuvent être fournies de manière séparée ou en mélange. Elles peuvent notamment être fournies sous la forme d'une composition les contenant, telle qu'un levain les contenant.
Généralement, ces souches seront en fait issues de repiquages préalables, destinés à stimuler la multiplication cellulaire, de sorte à ce que les souches soient en phase active de multiplication cellulaire. Il s'agira par exemple de levain chef pâteux ou séché (par lyophilisation, séchage ou atomisation), repiqué une ou deux fois, de sorte à disposer d'un levain réactivé comprenant lesdites souches.

Le procédé selon l'invention est notamment caractérisé en ce qu'il comprend au moins une étape de rafraîchi qui est réalisée non pas en milieu pâteux, comme cela est pratiqué dans l'art antérieur, mais en milieu liquide.
Le levain de rafraîchi obtenu à l'issue de ladite au moins une étape de rafraîchi est donc sous forme liquide. Ce levain de rafraîchi est obtenu par fermentation d'une composition qui comprend lesdites souches éventuellement réactivées par repiquage préalable, au moins une farine végétale forte, et de l'eau. Cette composition est donc le plus généralement elle aussi liquide avant fermentation.

Dans la présente demande, les termes « pâteux et liquide » sont tels qu'entendus par l'homme du métier dans le domaine de la production de pâtes fermentées sucrées capables de longue conservation. Classiquement, une composition sous forme pâteuse présente une teneur en matières sèches supérieure ou égale à 60 % en poids. Un levain de rafraîchi conforme à la présente invention est quant à lui suffisamment liquide pour pouvoir être pompé, ce qui se traduit généralement par une teneur en matière sèche inférieure ou égale à 50 %, préférentiellement inférieure ou égale à 45%, très préférentiellement inférieure ou égale à 40%, encore plus préférentiellement inférieure ou égale à 30%. La teneur minimale en matières sèches est quant à elle d'environ 10% en poids.
Par « teneur en matières sèches », il est ici entendu la teneur en matières sèches telle que mesurée par la méthode ISO 1026-1982, du chapitre 2.5.2.1 au chapitre 2.5.3.1.

A la connaissance de la Demanderesse, on n'a, dans l'art antérieur, jamais réalisé le rafraîchi en milieu liquide pour ce type de production. Dans l'art antérieur, le rafraîchi était mené en milieu pâteux de sorte à assurer une incorporation et une adaptation progressives du levain dans le substrat de pâte de pâtisserie.
Or, le rafraîchi est un élément essentiel à l'obtention d'une qualité de longue conservation. A la connaissance de la Demanderesse, rien ne suggérait qu'il était possible de modifier aisément ces étapes de rafraîchi, et plus particulièrement de les mener dans des conditions profondément différentes de celles qui sont pratiquées depuis des décennies, sans que les diverses qualités de ces produits, et notamment celle de longue conservation, ne s'en trouvent altérées. De manière plus générale, comme les procédés de production de pâte fermentée sucrée reposent essentiellement sur des connaissances empiriques et du savoir-faire tiré des coutumes et traditions, il n'est pas aisé de modifier l'une de ses étapes sans altérer la qualité du produit obtenu.
En outre, opérer le ou les rafraîchis en milieu liquide, comme proposé par la présente invention représente un avantage substantiel en termes de commodité d'emploi et de maniabilité. Ainsi, à l'issue de l'étape ou, le cas échéant, de chacune des étapes de rafraîchi liquide, la formulation présente l'avantage de pouvoir être stockée de 8 à 48 heures de 1°C à 6°C, sans altération de ces qualités produits. Un autre avantage est que le substrat peut être manié par pompage, ce qui facilite nettement l'automatisation du procédé, mais aussi sa maîtrise sanitaire.
Etant donné qu'un milieu liquide est plus homogène qu'un milieu pâteux, l'invention permet également de mieux maîtriser les conditions opératoires appliquées, telles que la température, mais aussi de mieux suivre et contrôler l'évolution des fermentations, notamment en termes de taux d'acidité titrable finale et de production de métabolites de fermentation (par exemple, éthanol, glycérol, acide acétique, acide butyrique, acides lactiques L et D).
La présente demande de brevet vise donc plus particulièrement un procédé de production d'une pâte fermentée sucrée de qualité longue conservation selon la revendication 1.

Une pâte fermentée sucrée de qualité longue conservation, éventuellement divisée et/ou façonnée, étant ainsi produite.

On notera ainsi que le levain de rafraîchi obtenu dans le procédé ici décrit est sous forme liquide. La personne du métier ajustera donc les proportions des différents composants de la composition dont il dérive par fermentation de sorte à ce qu'après fermentation, cette composition soit liquide, et plus particulièrement de sorte à ce qu'elle ne contienne pas plus de 50% de matières sèches en poids, préférentiellement pas plus de 45 %, très préférentiellement pas plus de 40%, encore plus préférentiellement pas plus de 30%. Il n'y a bien entendu pas de limite inférieure théoriquement imposée, mais dans la pratique, afin de maintenir une certaine efficacité, on n'observera des teneurs en matières sèches d'au moins 10% environ.

La composition formée lors de ladite au moins une étape de rafraîchi décrite au point b) sera donc dès le départ elle-même liquide, et plus particulièrement contiendra ses composants dans des proportions telles que sa teneur en matières sèches ne dépassera pas 40% en poids. Préférentiellement, cette teneur en matières sèches est inférieure ou égale à 30%.

Ladite au moins une étape de rafraîchi présentée au point b) ci-dessus comprend donc:
- la formation d'une composition liquide :
- qui comprend lesdites souches de levure et bactérie fournies, ainsi que de la farine végétale forte, et de l'eau, et
- dont la teneur en matières sèches est d'au plus 40 % en poids, et
- la fermentation de cette composition liquide à une température de 22°C à 30°C, aboutissant ainsi à l'obtention d'un levain fermenté, dit levain de rafraîchi, qui est sous forme liquide et qui est spécialement adapté à la production d'une pâte fermentée sucrée de qualité longue conservation.

Les souches de levure et de bactérie qui sont apportées à l'étape de rafraîchi, ou le cas échéant, à la première des étapes de rafraîchi, peuvent être apportées sous n'importe quelle forme, dans la mesure où elles sont viables et cellulairement actives dans un substrat comprenant farine végétale et eau.

Il peut s'agir de souches issues de cultures *in vitro* en conditions contrôlées, voire de cultures pures.
Mais, dans ce type de production de pâte fermentée sucrée de qualité longue conservation, les souches sont traditionnellement apportées sous la forme d'un levain chef pâteux ou « *Madre* », ou sous la forme séchée (par lyophilisation, séchage ou atomisation) de ce levain chef.
Généralement, on procède alors à une ou plusieurs étapes de repiquage préalables, de sorte à réactiver les cellules de levure et de bactérie contenues dans le levain chef, avant de les placer en ensemencement dans le substrat de rafraîchi. Le repiquage permet en effet de stimuler la multiplication cellulaire et, en conséquence, d'enrichir les levains en cellules de micro-organisme.
Cette ou ces étapes de repiquage comprennent généralement le repiquage de tout ou partie du levain chef fourni dans, ou sur un milieu favorable à la multiplication des cellules de levure et bactérie, et la mise en culture de ce milieu repiqué. Le milieu de repiquage comprend généralement de la farine végétale forte dans la gamme des farines de force W320 à W400 telle qu'une farine forte de froment, et éventuellement de l'eau. Les proportions sont généralement de l'ordre de 55 à 70% de farine forte pour 20 à 30% de levain chef, le reste éventuel étant de l'eau et/ou un complément de levure sous forme de pain de levure pressée ou levure sèche active ou lyophilisée, et/ou des bactéries lactiques lyophilisées ou FED (Ferment à. Ensemencement Direct), pour un total à 100%.
La culture de repiquage est traditionnellement menée à une température de 15 à 10 22°C, et on observe généralement une durée de 12 à 24 heures, par culture de repiquage.
Dans la présente demande, le terme « force » en relation à des farines est tel qu'entendu par la personne du métier. La force d'une farine est généralement mesurée à l'aide d'un alvéographe CHOPIN® (Société CHOPIN ; 20, avenue Marcellin-Berthelot ; Z.I. du Val de Seine ; F-62396 Villeneuve-la-Garenne, France ; www.chopin-sa.com), en suivant les normes en vigueur (ISO N°5530/4).

De préférence, ladite au moins une souche de levure appartient au genre *Saccharomyces,* par exemple à l'espèce *Saccharomyces exiguus* (souche ATCC 20 n°10599, par exemple) ou *Saccharomyces cerevisiae* (souche ATCC n° 12699 par exemple).
De préférence, ladite au moins une souche de bactérie est une bactérie lactique qui appartient au genre *Lactobacillus* ou *Leuconostoc.* On utilisera de préférence une bactérie *Lactobacillus* qui est hétérofermentaire facultative, ou bien homofermentaire obligatoire. Par exemple, on peut choisir une souche de l'espèce *Lactobacillus brevis* (souche ATCC n° 14869 par exemple) ou *Lactobacillus sanfranciscensis* (souche ATCC n°27651 par exemple) ou *Leuconostoc mesenteroïdes* (souche ATCC n°10830 par exemple) ou *Lactobacillus paracasei* (souche ATCC n° BAA-52).
Selon une caractéristique avantageuse de l'invention, ladite souche de levure est présente dans ledit levain chef pâteux à une concentration de 1.10⁶ à 1.10⁷ Unités Formant Colonie.

Selon une autre caractéristique avantageuse de l'invention, ladite souche de bactérie est présente dans ledit levain chef pâteux à une concentration de 5,5.10⁵ à 1.10⁶ Unités Formant Colonie.

Une fois que l'on dispose de souches de levure et bactérie dont les cellules sont de préférence en phase active de multiplication, on procède alors à l'opération que la personne du métier connaît sous le nom de rafraîchi (« *refresco* »). Lesdites souches de levure et bactérie servent alors d'inoculum.
Le rafraîchi comprend la fermentation d'un substrat, dit substrat de rafraîchi, qui comprend farine végétale et eau, par les souches de levure et de bactérie (éventuellement réactivées par repiquage), de sorte à aboutir à l'obtention d'un levain fermenté, dit levain rafraîchi, qui est adapté à la production d'une pâte fermentée de qualité longue conservation. Une telle fermentation se déroule généralement à une température de 22 à 30°C sur une durée de 2 à 5 heures.
On estime qu'un levain ainsi rafraîchi est adapté à l'obtention d'un produit qui conservera son moelleux à 6 mois, et qui bénéficiera d'une certaine protection contre les moisissures.
Le rafraîchi est un élément essentiel à l'obtention d'une qualité longue conservation. Lors du rafraîchi, sont en effet produits des métabolites de fermentation qui sont nécessaires à l'obtention de cette qualité de longue conservation. Alors que le repiquage a essentiellement pour objectif de réactiver la multiplication cellulaire, le rafraîchi a pour objectif essentiel d'adapter le métabolisme des cellules au type de substrat auquel elles sont destinées, à savoir un substrat de pâte à base de farine végétale et eau, et de déclencher et stimuler un certain nombre de productions et transformations métaboliques, avant même que ne commence l'étape de pâte proprement dite.
De manière remarquable, dans le procédé selon l'invention, l'étape de rafraîchi, ou au moins une des étapes de rafraîchi, est réalisée non pas en milieu pâteux, mais en milieu liquide. De préférence, toutes les étapes de rafraîchi sont réalisées en milieu liquide. Qu'elles soient apportées sous la forme d'un levain pâteux ou lyophilisé, ou issues de cultures en conditions contrôlées, les souches de levure et bactérie sont en fait généralement soumises à plusieurs étapes de rafraîchi, par itération en utilisant tout ou partie du levain rafraîchi issu du rafraîchi précédent comme forme d'apport des souches de levure et de bactérie. Généralement, on réalise deux ou trois étapes de rafraîchi. C'est notamment le cas pour la production de *Pugliese* et de *Panettone.*

Comme l'étape, ou le cas échéant au moins une des étapes de rafraîchi est, conformément à la présente invention, réalisée en milieu liquide, le levain liquide obtenu à l'issue d'une telle étape présente l'avantage de pouvoir être stocké de 8 à 48 heures de 1°C à 6°C sans altération de ces qualités produits.

On peut par exemple réaliser un premier rafraîchi, simplement en plaçant du levain chef pâteux dans de l'eau dans des proportions relatives de 55 à 65% de levain chef pour 35 à 45% d'eau (% de matière sèche en poids). On peut, si souhaité, y ajouter d'autres types de farine, tels que farine de malt, de seigle, de germes de blé, dans une proportion de 5 à 10% par rapport au total de matières sèches. Si le levain chef est sous forme lyophilisée, on peut dans ces 5 à 10%, apporter de la farine végétale forte W320 àW400, telle que de la farine de froment forte.
On pourra alors faire suivre ce rafraîchi d'une deuxième étape de rafraîchi, par exemple en mélangeant tout ou partie du levain de rafraîchi obtenu à l'issue de la première étape de rafraîchi dans des proportions relatives de 45 à 50% en poids, avec de l'eau à hauteur de 25 à 30% environ en poids, et avec une ou plusieurs farine(s) végétale(s) à hauteur de 20 à 25% environ en poids. Cette farine végétale sera de préférence une farine végétale forte choisie dans la gamme des farines W320 à W400, telle que la farine de froment. On peut additionner cette farine végétale forte d'un autre type de farine, telle que de la farine de malt, de seigle, de germes de blé, etc.
Si souhaité, on peut bien entendu procéder à une troisième étape de rafraîchi.

Selon un mode de réalisation particulier avantageux de l'invention, lesdites souches de levure et bactérie qui sont fournies à titre d'inoculum pour former la composition 30 de ladite au moins une étape de rafraîchi sont fournies sous forme de composition liquide, telle qu'un levain liquide.

On pourra alors former la composition liquide de ladite au moins une étape de rafraîchi très simplement, par exemple en mélangeant tout ou partie de cette composition ou levain liquide qui a pour fonction de fournir lesdites souches de levure et de bactérie, avec de l'eau, et éventuellement avec au moins une farine végétale forte choisie dans la gamme des farines W320 à W400, de sorte à ce que la teneur en matières sèches de la composition liquide résultante ne dépasse pas 50% en poids.
Si, comme c'est généralement le cas, on procède à au moins une étape de culture de repiquage, préalablement aux étapes de rafraîchi, on pourra alors réaliser cette au moins étape de culture de repiquage également en milieu liquide, par exemple en réalisant un repiquage sous la forme d'un levain liquide (c'est-à-dire un mélange de farine, d'eau, de levure et de bactérie sous forme liquide). On disposera alors d'une source de levure et bactérie réactivée en milieu liquide, que l'on pourra aisément utiliser comme inoculum lors de l'étape de rafraîchi pour former la composition qui, après fermentation, correspondra au levain de rafraîchi. Cette étape de culture de repiquage en milieu liquide nécessite généralement une culture de 12 à 19 heures, pour que les souches soient suffisamment réactivées. C'est notamment le cas lorsque l'on part d'un levain chef pâteux ou lyophilisé, que l'on place dans de l'eau, et que l'on cultive ce repiquage liquide une température de 15°C à 22°C.
Outre la praticabilité, procéder aux repiquages en milieu liquide de sorte à apporter lesdites souches sous forme liquide pour l'étape de rafraîchi présente l'avantage de permettre la conservation de ces compositions liquides inoculum de 8 à 48 heures de 1°C à 6°C sans altération de ces qualités produits.

Préalablement à ladite au moins une étape de repiquage en milieu liquide, le procédé selon l'invention pourra naturellement comprendre au moins une étape de culture de repiquage desdites souches de levure et bactérie en milieu solide. On pourra alors prendre tout ou partie d'un levain pâteux ou lyophilisé :
- pour le repiquer sur milieu solide (par exemple en le mélangeant à une forte proportion de farine végétale, par exemple de l'ordre de 55 à 70% du total des constituants), et ensuite le repiquer sur milieu liquide, de sorte à disposer d'un levain liquide réactivé destiné à être rafraîchi, ou bien encore,
- pour le repiquer directement sur milieu liquide (par exemple, en le plaçant directement dans de l'eau, dans une proportion de 55 à 65% pour 35 à 45% d'eau, en ajoutant au plus 10% de farine végétale par rapport au total des constituants).

Après l'opération de rafraîchi, le procédé selon l'invention comprend au moins une étape de pâte.
Il s'agit d'amener le levain issu du, ou le cas échéant des étapes de rafraîchi, en mélange avec les ingrédients de la pâte de pâtisserie, c'est-à-dire les ingrédients qui, après éventuel division, façonnage (boulage, par exemple), développement et/ou cuisson, compose le produit de pâte de qualité longue conservation. Cette ou ces étapes de pâte sont menées conformément aux usages et pratiques en la matière.

La présente description divulgue aussi une pâte qui comprend le mélange de tout ou partie dudit levain rafraîchi avec un ou plusieurs ingrédients de pâte de pâtisserie dont au moins une farine végétale forte choisie dans la gamme des farines W320 à W400 (préférentiellement dans la gamme des farines W350 à W380), telle qu'une farine de froment, de sorte à former un mélange pâteux de type pâte de pâtisserie. Si souhaité, ce mélange pâteux peut être soumis à pétrissage, de sorte à rendre la structure de la pâte plus homogène.

Généralement, on souhaite faire lever cette pâte, de sorte à ce qu'elle gonfle et adopte ainsi une texture plus aérée. C'est pourquoi on ajoute généralement dans le mélange d'ingrédients formant pâte de pâtisserie, en outre de la farine forte, un agent susceptible d'induire un gonflement de la pâte telle qu'une levure de type levure de boulangerie (par exemple, *Saccharomyces cerevisiae* Lesaffre « Hirondelle bleue »). On place alors le mélange pâteux formé dans des conditions, et notamment des conditions de température, adaptées à l'activité fermentaire de la levure ajoutée, de sorte à ce qu'il se produise un dégagement gazeux et notamment un dégagement de CO2 suffisant pour que la pâte gonfle jusqu'au volume souhaité.

Cette étape de pâte peut être suivie d'une ou plusieurs autres étapes de pâte, réalisées en itération en utilisant tout ou partie de la pâte fermentée obtenue à l'issue de l'étape de pâte précédente, en lieu et place du levain rafraîchi de la première étape de pâte, c'est-à-dire en mélangeant tout ou partie de la pâte issue de l'étape de pâte précédente avec un nouvel apport d'ingrédients de pâte de pâtisserie (au moins une farine forte). On peut à cette occasion, procéder à des opérations de division, boulage et autre façonnage de sorte à répartir et présenter la pâte selon le volume et la forme souhaités pour le produit fini. De même, on peut lors de cette ou ces autres étapes de pâte, faire lever la pâte, comme ci-dessus décrit.

Pour au moins une des étapes de pâte, et généralement pour toutes les étapes de pâte, on utilise, en outre de la farine forte, au moins un sucre (par exemple, saccharose, sirop de glucose, sucre inverti) à titre d'ingrédient de pâte de pâtisserie.

De préférence, afin de respecter la qualité de longue conservation, on réalisera les étapes de pâte dans des conditions d'hygrométrie qui ne conduisent pas à un dessèchement de la pâte, par exemple en travaillant sous un degré d'hygrométrie relative d'au moins 55%, de préférence d'au moins 70%, avantageusement entre 75% et 90%, par exemple 85%.

Généralement, le procédé selon l'invention comprend au moins deux étapes de pâte.

Pour former la première pâte, on peut par exemple mélanger ensemble :
- 15 à 38 % de levain de rafraîchi (liquide),
- 28 à 65% de farine de froment forte,
- 0 à 18% d'oeufs entiers,
- 0 à 12% de jaunes d'oeufs,
- 5 à 10% de saccharose,
- 3 à 18% de graisses (huile ou matières grasses concrètes),
- 0 à 3% de levure de boulangerie par exemple *S. cerevisiae* Lesaffre «Hirondelle Bleue® »,
- 0 à 22% d'eau,
- 0,06 à 0,15% d'enzymes de panification,
- 0,2 à 0,8% de sel,
pour un total de 100%.
Ces ingrédients peuvent être pétris ensemble 15 à 25min dans un pétrin de type spirale.

Ce premier mélange pâteux est ensuite être mis à lever (production de CO₂ par activité fermentaire de la levure de boulangerie ajoutée), par exemple en le plaçant à une température de 18 à 25 °C pendant une durée de 2 à 6 heures dans des conditions d'hygrométrie ambiantes, aboutissant ainsi à l'obtention d'une première pâte levée. Le premier mélange pâteux présente alors classiquement un pH de 5,5 à 5,9 avant développement, et la pâte levée obtenue un pH de 4,8 à 5,4.
Au cours de ce développement de pâte, le volume de pâte est classiquement multiplié para ou 4.

Pour former la deuxième pâte, on peut par exemple mélanger ensemble :
- 40 à 50% de la première pâte obtenue à l'issue de la première étape de pâte,
- 14 à 25% de farine de froment forte,
- 0 à 18% d'oeufs entiers,
- 4 à 8% de saccharose,
- 0 à 3% de sirop de glucose,
- 0 à 3% de sucre inverti,
- 0,05 à 1% de levure de boulangerie par exemple Lesaffre « Hirondelle
- Bleue® »,
- 3à 12% d'eau,
- 0,3 à 3% d'émulsifiants,
- 0,2 à 0,8% de sel,
- 2 à 5% de graisses (huile ou matières grasses concrètes),
- 0 à 1,5% de glycérine,
- éventuellement, farine complète, sons, flocons de céréales, morceaux de fruits confits, pépites de chocolats, selon les goûts et usages des consommateurs visés,
pour un total de 100%.
Ces ingrédients peuvent être pétris ensemble 20 à 30min dans un pétrin de type spirale.
Le mélange pâteux obtenu peut alors être mis en repos pour une durée allant jusqu'à 20min, puis subit une opération de division / boulage afin de former de petites boules de 22 à 50g. Ces boules peuvent être déposées directement dans les alvéoles d'une plaque ou dans un moule papier.
Le mélange pâteux est alors mis à lever (production de CO₂ par activité fermentaire de la levure de boulangerie ajoutée), par exemple à une température de 25°C à 30°C et sous un degré d'hygrométrie relative de 75 à 90 % pendant une durée de 2 à 8 heures, aboutissant ainsi à l'obtention d'une deuxième pâte levée. Cette deuxième pâte levée présente classiquement un pH de 5 à 5,5. Au cours de ce développement de pâte, le volume des pâtons est classiquement multiplié par 3 ou 4.

On procède enfin à la cuisson de la pâte obtenue (ou à la cuisson des unités de pâte façonnées). Classiquement, la pâte fermentée sucrée obtenue est cuite 15 à 22min à une température de 130°C à 220°C.

Les produits Panettone ainsi obtenus pourront, éventuellement, être fourrés avec une garniture. Cette garniture est généralement une garniture sucrée, mais une garniture salée n'est pas non plus exclue.

On peut alors, si souhaité, procéder à l'emballage de la pâte fermentée sucrée obtenu, ou du produit à pâte fermentée sucrée obtenu.

On obtient alors un produit à pâte fermentée sucrée de type *Panettone, Pugliese,* ou *Pandoro,* qui présente une qualité de longue conservation à température ambiante sous emballage.

Est aussi décrit un levain liquide qui contient au plus 50 % de matières sèches en poids, et qui est spécialement adapté à une utilisation comme levain de rafraîchi dans la production d'une pâte fermentée sucrée de qualité longue conservation, ou comme composition liquide permettant l'obtention d'un tel levain de rafraîchi. Ce levain liquide comprend au moins une farine végétale forte choisie dans la gamme des farines W320 à W400, préférentiellement dans la gamme des W350 ,à W380, telle qu'une farine de froment forte, et au moins une souche de levure, et au moins une souche de bactérie lactique. De préférence, ladite au moins une souche de levure appartient au genre *Saccharomyces,* par exemple à l'espèce *Saccharomyces cerevisiae* (souche ATCC n°12699 par exemple). Plus préférentiellement, ladite au moins une souche de levure est une souche de *Saccharomyces exiguus* (souche ATCC n°10599, par exemple).
De préférence, ladite au moins une souche de bactérie est une bactérie lactique qui appartient au genre *Lactobacillus* ou *Leuconostoc.* On utilisera de préférence une bactérie *Lactobacillus* qui est hétérofermentaire facultative, ou bien homofermentaire obligatoire: Par exemple, on peut choisir une souche de l'espèce *Lactobacillus brevis* (souche ATCC n°14869 par exemple) ou *Leuconostoc mesenteroïdes* (souche ATCC n°10830 par exemple) ou *Lactobacillus paracasei* (souche ATCC n° BAA-52). Plus préférentiellement, ladite au moins une souche de bactérie est une souche de *Lactobacillus sanfranciscensis* (souche ATCC n°27651 par exemple).
Un tel levain liquide présente classiquement une acidité totale titrable finale de l'ordre de 70 à 100 meq/Kg et un pH compris entre 3,8 et 4,2.

Grâce au procédé de l'invention, les produits fermentés sucrés de qualité longue conservation de type panettone mis sous emballage, optionnellement en atmosphère, auront la propriété de se conserver organoleptiquement et microbiologiquement au moins 6 mois à température ambiante.

### EXEMPLE de production d'un Panettone :

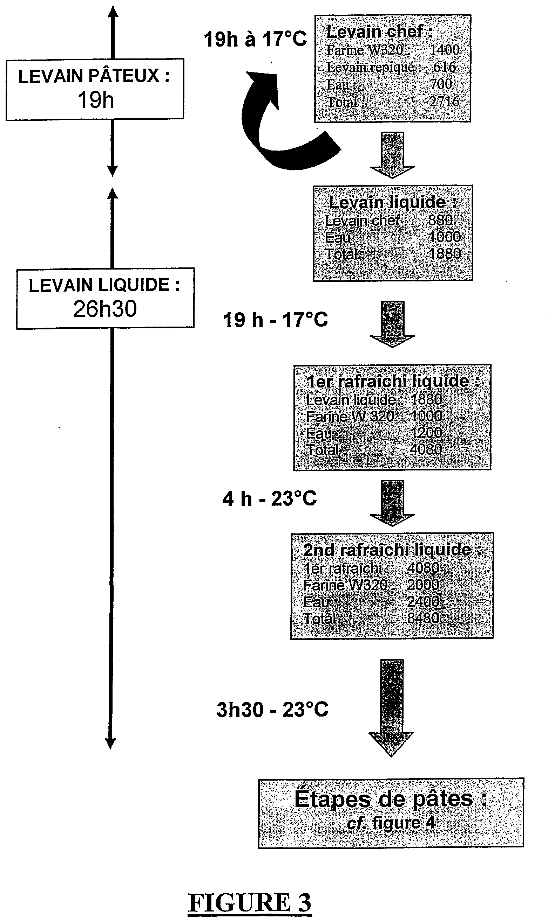

Les figures 3 et 4 présentent un schéma de production suivi sous la forme d'un diagramme d'étapes.
Tous les pourcentages indiqués sont en poids.

### 1/ Levain chef (« madre ») : repiquage en milieu solide

Nous utilisons le levain sec commercialisé par DSM© sous le nom commercial « Il crescenteC » mais en suivant le procédé conforme à l'invention (le protocole d'utilisation fourni par DSM n'a pas donné les résultats escomptés sur nos formulations). On apporte farine de froment de force W320, levain DSM© commercialisé sous la désignation « Il crescente© », et eau froide dans des proportions de 49,7%, 19,0% et 31,3% respectivement. On place l'ensemble de ces ingrédients dans un pétrin de type ARTOFEX©, et on fait pétrir pendant 8 minutes,
Le mélange pétri est ensuite placé pour fermentation à 17°C pendant 19h en anaérobie et sous 60% d'humidité relative.

### 2/ Levain liquide

47% de levain chef issu de la fermentation décrite au point a), et 53% d'eau froide sont homogénéisés ensemble avec une défloculeuse. L'ensemble est placé en fermentation à 17°C pendant 19 heures, sous agitation lente et re-circulation, de sorte à éviter toute sédimentation et de maintenir l'homogénéité de l'ensemble.

### 3/ Premier rafraîchi

On place tout le levain liquide issu du point b) dans la cuve, et on y ajoute farine de froment W320 et eau froide dans des proportions de 25% et 29% respectivement (le levain liquide du point b) représentant donc 46% de l'ensemble).
On fait fermenter à 23°C pendant 4 heures, sous agitation lente et re-circulation afin d'éviter toute sédimentation et de maintenir l'homogénéité de l'ensemble.

### 4/ Second rafraîchi

On place tout le premier rafraîchi issu du point c) dans la cuve, et on y ajoute farine de froment W320 et eau froide dans des proportions de 24% et 28% respectivement (le levain liquide du point b) représentant donc 48% de l'ensemble).

On fait fermenter à 23°C pendant 3h30, sous agitation lente et re-circulation afin d'éviter toute sédimentation et de maintenir l'homogénéité de l'ensemble.

### 5/1ère pâte

On prépare une 1^{ie}' pâte comprenant un mélange de :
- levain réactivé et rafraîchi issu du point d) à 35,1%
- saccharose à 9,6%
- farine de froment W320 à 39,4%
- oeufs entiers à 8,0%
- eau à 0%
- graisses à 4,1%
- levure de boulangerie par exemple Lesaffre « Hirondelle Bleue® » à 0,9%
- enzymes de panification à 0,31%.

Ces ingrédients sont pétris pendant 15-25 minutes pour former la première pâte dans un pétrin de type spirale. Le pH de cette pâte en fin de pétrissage est de 5,5 à 5,9.

La 1'^{ère} pâte ainsi formée est mise à fermenter 3h30 à une température de 20°C dans des conditions d'hygrométrie ambiantes.
Au cours de cette fermentation, le volume de pâte est multiplié par 3 ou 4.
Le pH de la pâte en fin de fermentation est de 4,8 à 5,4.

### 6/2ème pâte

La première pâte, issue du point 5/, est reprise pour la fabrication d'une 2^{i8me} pâte dont la composition est la suivante :
- 1'^{ère} pâte : 54,4%
- saccharose : 5,2%
- sucre inverti : 2,7%
- farine : 22,2%
- oeufs entiers : 2,1%
- eau : 3,5%
- graisses : 5,7%
- levure de boulangerie par exemple Lesaffre « Hirondelle Bleue® »: 1,7%
- sel: 0,3%
- émulsifiants : 0,7%
- glycérine : 1%

### 7/ Division/boulage

La deuxième pâte, issue du point f), est façonnée en pâtons de 30g par une diviseuse- houleuse traditionnelle, déposée sur une plaque métallique, et placée pour fermentation à 28°C pendant 5h sous 85% d'humidité relative (HRE). Le volume augmente d'environ 3 fois.

### 8/ Cuisson

La pâte issue du point g) est ensuite cuite 13 minutes à 210°C.
Après cuisson, les produits sont conditionnés sous emballage, et peuvent être ainsi conservés au moins 6 mois à température ambiante (DLUO de 6 mois).

## Revendications

1. Procédé de production d'un produit à pâte fermentée sucrée de qualité longue conservation, comprenant:
a) la fourniture, à titre d'inoculum, d'au moins une souche de levure et d'au moins une souche de bactérie lactique, sous formes séparées ou en mélange, éventuellement sous la forme d'une composition les contenant,
lesdites souches fournies étant éventuellement issues d'une ou plusieurs étapes de culture de repiquage, destinées à stimuler la multiplication cellulaire de ces souches,
b) au moins une étape de rafraîchi qui comprend :
- la formation d'une composition liquide qui comprend lesdites souches de levure et bactérie fournies, ainsi que de la farine végétale forte, et de l'eau, et dont la teneur en matières sèches est d'au plus 40% en poids et,
- la fermentation de cette composition liquide à une température de 22°C à 30°C;
aboutissant ainsi à l'obtention d'un levain fermenté, dit levain de rafraîchi, qui est sous forme liquide et qui est spécialement adapté à la production d'une pâte fermentée sucrée de qualité longue conservation.
c) au moins une étape de pâte qui comprend :
- le mélange de tout ou partie du levain de rafraîchi liquide obtenu à l'issue de l'étape de rafraîchi précédente, avec un ou plusieurs ingrédients de pâte de pâtisserie dont au moins une farine végétale forte choisie dans la gamme des farines W320 à W400, de sorte à obtenir un mélange pâteux,
- optionnellement, le pétrissage de ce mélange pâteux,
- optionnellement, la mise en repos de ce mélange pâteux,
- optionnellement, la division et/ou le façonnage de ce mélange pâteux,
- la fermentation du mélange pâteux résultant, aboutissant ainsi à une pâte fermentée, éventuellement divisée et/ou façonnée,
cette au moins une étape de pâte étant éventuellement réitérée, en utilisant tout ou partie de la pâte obtenue à l'issue de l'étape de pâte précédente, en lieu et place dudit levain de rafraîchi,
à la condition qu'au moins l'un des mélanges pâteux formés avant fermentation comprenne en outre au moins un sucre,
d) la cuisson de la pâte fermentée sucrée obtenue à l'issue de, ou le cas échéant des étapes de pâte,
**caractérisé en ce que** le levain de rafraîchi sous forme liquide obtenu à l'étape b) ne contient pas plus de 40% de matières sèches en poids,

2. Procédé selon la revendication 1, **caractérisé en ce que** lors de ladite au moins une étape de rafraîchi, ladite composition liquide est fermentée à une température de 22 à 30°C pendant 2 à 5 heures.

3. Procédé selon la revendication 1 ou 2, caractérisé en qu'il comprend deux ou trois étapes de rafraîchi.

4. Procédé selon l'une quelconque des revendications 1 à 3, **caractérisé en ce que** lesdites souches de levure et bactérie qui sont fournies pour former la composition liquide de ladite au moins une étape de rafraîchi sont fournies en mélange sous la forme d'un levain liquide.

5. Procédé selon la revendication 4, **caractérisé en ce que** la composition liquide de ladite au moins une étape de rafraîchi est formée par mélange de tout ou partie dudit levain liquide fournissant lesdites souches de levure et de bactérie, avec au moins une farine végétale forte choisie dans la gamme des farines W320 à W400, et avec de l'eau, de sorte à ce que la teneur en matières sèches de la composition liquide résultante ne dépasse pas 40% en poids.

6. Procédé selon l'une quelconque des revendications précédentes, **caractérisé en ce qu'**il comprend, préalablement à ladite au moins une étape de rafraîchi, au moins une étape de culture de repiquage desdites souches de levure et bactérie à une température de 15°C à 22°C.

7. Procédé selon la revendication 6, **caractérisé en ce que** ladite au moins une étape de culture de repiquage est en milieu liquide.

8. Procédé selon la revendication 7, **caractérisé en ce que** ladite étape de culture de repiquage en milieu liquide dure de 12 à 24 heures.

9. Procédé selon la revendication 7 ou 8, **caractérisé en ce que**, préalablement à ladite au moins une étape de repiquage en milieu liquide, il comprend au moins une étape de culture de repiquage desdites souches de levure et bactérie en milieu solide.

10. Procédé selon l'une quelconque des revendications 7 à 9, **caractérisé en ce que** lesdites souches de levure et bactérie sont fournies audit milieu de repiquage solide et/ou audit milieu de repiquage liquide sous la forme d'un levain pâteux ou séché.

11. Procédé selon l'une quelconque des revendications précédentes, **caractérisé en ce que** ladite au moins une souche de levure appartient au genre *Saccharomyces.*

12. Procédé selon l'une quelconque des revendications précédentes, **caractérisé en ce que** ladite au moins une souche de levure appartient à l'espèce *Saccharomyces exiguus* ou *Saccharomyces cerevisiae.*

13. Procédé selon l'une quelconque des revendications précédentes, **caractérisé en ce que** ladite au moins une souche de bactérie lactique appartient au genre *Lactobacillus* ou *Leuconostoc.*

14. Procédé selon l'une quelconque des revendications précédentes, **caractérisé en ce que** ladite au moins une souche de bactérie lactique appartient à l'espèce *Lactobacillus brevis* ou *Lactobacillus sanfranciscensis* ou *Leuconostoc mesenteroïdes* ou *Lactobacillus paracasei.*

15. Procédé selon l'une quelconque des revendications précédentes, **caractérisé en ce que** ladite au moins une étape de pâte est menée sous un degré d'hygrométrie relative d'au moins 55%.

16. Procédé selon l'une quelconque des revendications précédentes, **caractérisé en ce que** lesdits ingrédients de pâte de pâtisserie de ladite au moins une étape de pâte comprennent, en outre de la farine forte, un agent susceptible d'induire un gonflement de la pâte.

17. Procédé selon la revendication 16, **caractérisé en ce que** ledit agent susceptible d'induire un gonflement de la pâte est une souche de *Saccharomyces cerevisiae.*

18. Procédé selon l'une quelconque des revendications précédentes, **caractérisé en ce qu'**il comprend deux étapes de pâte.

19. Procédé selon la revendication 18, **caractérisé en ce que** le premier mélange pâteux formé lors de la première étape de pâte est mis à lever à une température de 18 à 25 °C pendant une durée de 2 à 6 heures, aboutissant ainsi à l'obtention d'une première pâte levée.

20. Procédé selon la revendication 19, **caractérisé en ce que** ledit premier mélange pâteux présente un pH de 5,5 à 5,9 avant développement.

21. Procédé selon la revendication 19 ou 20, **caractérisé en ce que** ladite première pâte présente un pH de 4,8 à 5,4 après développement.

22. Procédé selon l'une quelconque des revendications 18 à 21, **caractérisé en ce que** le deuxième mélange pâteux obtenu lors de la deuxième étape de pâte est mis à lever à une température de 25°C à 30°C et sous un degré d'hygrométrie relative de 75 à 90 % pendant une durée de 2 à 8 heures, aboutissant ainsi à l'obtention d'une deuxième pâte levée.

23. Procédé selon la revendication 22, **caractérisé en ce que** ladite deuxième pâte levée présente un pH de 5 à 5,5.

24. Procédé selon l'une quelconque des revendications précédentes, **caractérisé en ce que** le produit à pâte fermentée sucrée est un produit tel que *Panettone,* ou *Pandoro,* ou *Pugliese.*

## Patentansprüche

1. Verfahren zum Herstellen eines Produkts aus süß-fermentiertem Teig mit langer Haltbarkeit, umfassend:
a) Bereitstellen mindestens eines Hefestamms und mindestens eines Milchsäurebakterienstamms als Inokulum in getrennten Formen oder als Mischung, gegebenenfalls in Form einer Zusammensetzung, die sie enthält,
wobei die bereitgestellten Stämme gegebenenfalls aus einem oder mehreren Impfkulturschritten stammen, die die Zellvermehrung dieser Stämme stimulieren sollen,
b) mindestens einen Abkühlschritt, umfassend:
- Bilden einer flüssigen Zusammensetzung, die die bereitgestellten Hefe- und Bakterienstämme sowie kräftiges pflanzliches Mehl und Wasser enthält und deren Gehalt an Trockensubstanzen nicht mehr als 40 Gew.-% beträgt, und
- Fermentieren dieser flüssigen Zusammensetzung bei einer Temperatur von 22 °C bis 30 °C; wodurch ein fermentierter Sauerteig erhalten wird, der als aufgefrischter Sauerteig bezeichnet wird, der in flüssiger Form vorliegt und speziell zur Herstellung eines süß-fermentierten Teigs mit langer Haltbarkeit ausgelegt ist,
c) mindestens einen Teigschritt, umfassend:
- Mischen des gesamten oder eines Teils des flüssigen abgekühlten Sauerteigs, der aus dem vorherigen Auffrischschritt erhalten wird, mit einem oder mehreren Feingebäckteigbestandteilen, von denen mindestens ein kräftiges pflanzliches Mehl aus dem Bereich der Mehle W320 bis W400 so ausgewählt ist, dass eine Teigmischung erhalten wird,
- gegebenenfalls Kneten dieser Teigmischung,
- gegebenenfalls Ruhenlassen dieser Teigmischung,
- gegebenenfalls Teilen und/oder Formen dieser Teigmischung,
- Fermentieren der resultierenden Teigmischung, wodurch ein gegebenenfalls geteilter und/oder geformter fermentierter Teig erhalten wird,
wobei dieser mindestens eine Teigschritt gegebenenfalls unter Verwendung des gesamten oder eines Teils des aus dem vorherigen Teigschritt erhaltenen Teigs anstelle des aufgefrischten Sauerteigs wiederholt wird,
mit der Maßgabe, dass mindestens eine der vor dem Fermentieren erzeugten Teigmischungen ferner mindestens einen Zucker enthält,
d) Backen des aus dem oder ggf. den Teigschritten erhaltenen süß-fermentierten Teigs,
**dadurch gekennzeichnet, dass** der in Schritt b) erhaltene aufgefrischte Sauerteig in flüssiger Form zu nicht mehr als 40 Gew.-% Trockensubstanzen enthält.

2. Verfahren nach Anspruch 1, **dadurch gekennzeichnet, dass** die flüssige Zusammensetzung während des mindestens einen Auffrischschritts 2 bis 5 Stunden bei einer Temperatur von 22 bis 30 °C fermentiert wird.

3. Verfahren nach Anspruch 1 oder 2, **dadurch gekennzeichnet, dass** es zwei oder drei Auffrischschritte umfasst.

4. Verfahren nach einem der Ansprüche 1 bis 3, **dadurch gekennzeichnet, dass** die Hefe- und Bakterienstämme, die zum Bilden der flüssigen Zusammensetzung des mindestens einen Auffrischschritts bereitgestellt werden, als Mischung in Form eines flüssigen Sauerteigs bereitgestellt werden.

5. Verfahren nach Anspruch 4, **dadurch gekennzeichnet, dass** die flüssige Zusammensetzung des mindestens einen Auffrischschritts durch Mischen des gesamten oder eines Teils des flüssigen Sauerteigs, der die Hefe- und Bakterienstämme bereitstellt, mit mindestens einem kräftigen pflanzlichen Mehl, ausgewählt aus dem Bereich der Mehle W320 bis W400, und mit Wasser so gebildet wird, dass der Gehalt an Trockensubstanzen der resultierenden flüssigen Zusammensetzung 40 Gew.-% nicht überschreitet.

6. Verfahren nach einem der vorhergehenden Ansprüche, **dadurch gekennzeichnet, dass** es vor dem mindestens einen Auffrischschritt mindestens einen Impfkulturschritt der Hefe- und Bakterienstämme bei einer Temperatur von 15 °C bis 22 °C umfasst.

7. Verfahren nach Anspruch 6, **dadurch gekennzeichnet, dass** der mindestens eine Impfkulturschritt in einem flüssigen Medium erfolgt.

8. Verfahren nach Anspruch 7, **dadurch gekennzeichnet, dass** der Impfkulturschritt in einem flüssigen Medium 12 bis 24 Stunden dauert.

9. Verfahren nach Anspruch 7 oder 8, **dadurch gekennzeichnet, dass** es vor dem mindestens einen Impfkulturschritt in einem flüssigen Medium mindestens einen Impfkulturschritt der Hefe- und Bakterienstämme in einem festen Medium umfasst.

10. Verfahren nach einem der Ansprüche 7 bis 9, **dadurch gekennzeichnet, dass** die Hefe- und Bakterienstämme dem festen Impfkulturmedium und/oder dem flüssigen Impfkulturmedium in Form eines teigigen oder getrockneten Sauerteigs zugeführt werden.

11. Verfahren nach einem der vorhergehenden Ansprüche, **dadurch gekennzeichnet, dass** der mindestens eine Hefestamm der Gattung *Saccharomyces* angehört.

12. Verfahren nach einem der vorhergehenden Ansprüche, **dadurch gekennzeichnet, dass** der mindestens eine Hefestamm der Spezies *Saccharomyces exiguus* oder *Saccharomyces cerevisiae* angehört.

13. Verfahren nach einem der vorhergehenden Ansprüche, **dadurch gekennzeichnet, dass** der mindestens eine Milchsäurebakterienstamm der Gattung *Lactobacillus* oder *Leuconostoc* angehört.

14. Verfahren nach einem der vorhergehenden Ansprüche, **dadurch gekennzeichnet, dass** der mindestens eine Milchsäurebakterienstamm der Spezies *Lactobacillus brevis* oder *Lactobacillus sanfranciscensis* oder *Leuconostoc mesenteroides* oder *Lactobacillus paracasei* angehört.

15. Verfahren nach einem der vorhergehenden Ansprüche, **dadurch gekennzeichnet, dass** der mindestens eine Teigschritt bei einer relativen Feuchtigkeit von mindestens 55 % durchgeführt wird.

16. Verfahren nach einem der vorhergehenden Ansprüche, **dadurch gekennzeichnet, dass** die Feingebäckteigbestandteile des mindestens einen Teigschritts zusätzlich zu dem kräftigen Mehl ein Mittel umfassen, das in der Lage ist, ein Aufgehen des Teigs zu bewirken.

17. Verfahren nach Anspruch 16, **dadurch gekennzeichnet, dass** das Mittel, das in der Lage ist, das Aufgehen des Teigs zu bewirken, ein Stamm von *Saccharomyces cerevisiae* ist.

18. Verfahren nach einem der vorhergehenden Ansprüche, **dadurch gekennzeichnet, dass** es zwei Teigschritte umfasst.

19. Verfahren nach Anspruch 18, **dadurch gekennzeichnet, dass** die erste Teigmischung, die während des ersten Teigschritts gebildet wird, bei einer Temperatur von 18 bis 25 °C 2 bis 6 Stunden aufgeht, wodurch ein erster aufgegangener Teig erhalten wird.

20. Verfahren nach Anspruch 19, **dadurch gekennzeichnet, dass** die erste Teigmischung vor der Entwicklung einen pH-Wert von 5,5 bis 5,9 hat.

21. Verfahren nach Anspruch 19 oder 20, **dadurch gekennzeichnet, dass** der erste Teig nach der Entwicklung einen pH-Wert von 4,8 bis 5,4 hat.

22. Verfahren nach einem der Ansprüche 18 bis 21, **dadurch gekennzeichnet, dass** die zweite Teigmischung, die während des zweiten Teigschritts erhalten wird, bei einer Temperatur von 25 °C bis 30 °C und bei einer relativen Feuchtigkeit von 75 bis 90 % 2 bis 8 Stunden aufgeht, wodurch ein zweiter aufgegangener Teig erhalten wird.

23. Verfahren nach Anspruch 22, **dadurch gekennzeichnet, dass** der zweite aufgegangene Teig einen pH-Wert von 5 bis 5,5 hat.

24. Verfahren nach einem der vorhergehenden Ansprüche, **dadurch gekennzeichnet, dass** das Produkt aus süß-fermentiertem Teig ein Produkt wie *Panettone* oder *Pandoro* oder *Pugliese* ist.

## Claims

1. A process for the manufacture of a sweet fermented dough having a long shelf-life, comprising:
a) a supply of at least one yeast strain and at least one lactic acid bacteria strain, separated or in mixture form, or a composition thereof, using inoculum;
said strains derived from one or more subculturing steps designed to stimulate cellular multiplication of said strains,
b) at least one refresh step comprising:
- the formation of a liquid composition comprised of said yeast and bacteria strains, and strong vegetable flour and water, wherein the content of dry materials is at most 40% by weight, and
- the fermentation of said liquid composition at a temperature of between 22°C and 30°C, resulting in a fermented starter called refresh starter, liquid in form and particularly suited for the production of a shelf-stable sweet fermented dough.
c) at least one dough step comprising:
- the mixture of all or part of the liquid refresh starter obtained at the end of the preceding refresh step, having one or more pastry dough ingredients, at least one of which is a strong vegetable flour chosen from among flours in the W320 to W400 range, so as to obtain a doughy mixture,
- optionally, the kneading of said doughy mixture,
- optionally, the resting of said doughy mixture,
- optionally, the division and/or the shaping of said doughy mixture,
- the fermentation of the resulting doughy mixture resulting in a fermented dough, divided and/or shaped,
said dough step or steps possibly repeated using all or part of the dough obtained at completion of the preceding dough step instead and in place of the refresh starter,
provided that at least one of the doughy mixtures formed before fermentation further comprises at least one sugar,
d) the baking of the sweet fermented dough obtained at completion of the dough step or steps,
**characterized in that** the refresh starter in liquid form obtained in step b) contains at most 40% dry materials by weight,

2. The process according to claim 1, **characterized in that,** during the said refresh step or steps, said liquid composition is fermented at a temperature of 22°C to 30°C for 2 to 5 hours.

3. The process according to claim 1 or 2, **characterized in that** it comprises two or three refresh steps.

4. The process according to any one of claims 1 to 3, **characterized in that** the said strains of yeast and bacteria provided to form the liquid composition of the said refresh step or steps are introduced into the mixture in the form of a liquid starter.

5. The process according to claim 4, **characterized in that** the liquid composition of the said refresh step or steps is formed by mixing all or part of the said liquid starter supplying said strains of yeast and bacteria with at least one strong vegetable flour chosen within the range of W320 to W400 flours and with water, in a manner such that the content of dry materials of the resulting liquid composition does not exceed 40% by weight.

6. The process according to any one of the preceding claims, **characterized in that,** prior to the said refresh step or steps, it comprises at least one step of subculturing said yeast and bacteria strains at a temperature of 15°C to 22°C.

7. The process according to claim 6, **characterized in that** the said subculturing step or steps is in liquid medium.

8. The process according to claim 7, **characterized in that** the said subculturing step in liquid medium lasts for 12 to 24 hours.

9. The process according to claim 7 or 8, **characterized in that,** prior to the said subculturing step or steps in liquid medium, it comprises at least one step of subculturing the said strains of yeast and bacteria in solid medium.

10. The process according to any one of claims 7 to 9, **characterized in that** the said strains of yeast and bacteria are provided to said solid subculturing medium and/or said liquid subculturing medium in a doughy or dry starter form.

11. The process according to any one of the preceding claims, **characterized in that** the said strain or strains of yeast belongs to the genus *Saccharomyces.*

12. The process according to any one of the preceding claims, **characterized in that** the said strain or strains of yeast belongs to the species *Saccharomyces exiguus* or *Saccharomyces cerevisiae.*

13. The process according to any one of the preceding claims, **characterized in that** the said strain or strains of lactic acid bacteria belongs to the genus *Lactobacillus* or *Leuconostoc.*

14. The process according to any one of the preceding claims, **characterized in that** the said strain or strains of lactic acid bacteria belongs to the species *Lactobacillus brevis* or *Lactobacillus sanfranciscensis* or *Leuconostoc mesenteroïdes* or *Lactobacillus paracasei.*

15. The process according to any one of the preceding claims, **characterized in that** the said dough step or steps is carried out in a relative humidity of at least 55%.

16. The process according to any one of the preceding claims, **characterized in that** the said pastry dough ingredients of the said dough step or steps comprise, in addition to the strong flour, a dough rising agent.

17. The process according to claim 16, **characterized in that** the said dough rising agent is a strain of *Saccharomyces cerevisiae.*

18. The process according to any one of the preceding claims, **characterized in that** it comprises two dough steps.

19. The process according to claim 18, **characterized in that** the first doughy mixture formed during the first dough step is set to rise at a temperature of 18°C to 25°C for 2 to 6 hours, resulting in the first dough rise.

20. The process according to claim 19, **characterized in that** the said first doughy mixture has a pH of 5.5 to 5.9 prior to expansion.

21. The process according to claim 19 or 20, **characterized in that** the said first doughy mixture has a pH of 4.8 to 5.4 after expansion.

22. The process according to any one of claims 18 to 21, **characterized in that** the second doughy mixture obtained during the second dough step rises at a temperature of 25°C to 30°C in 75% to 90% relative humidity for 2 to 8 hours, resulting in the second dough rise.

23. The process according to claim 22, **characterized in that** the said second doughy mixture has a pH of 5 to 5.5.

24. The process according to any one of the preceding claims, **characterized in that** the sweet fermented dough product is a product such as *Panettone,* or *Pandoro,* or *Pugliese.*
